(19) **Europäisches Patentamt**
**European Patent Office**
**Office européen des brevets**

(11) **EP 3 982 153 A1**

(12) **EUROPEAN PATENT APPLICATION**

(43) Date of publication:
**13.04.2022 Bulletin 2022/15**

(21) Application number: **21198075.0**

(22) Date of filing: **21.09.2021**

(51) International Patent Classification (IPC):
**G01S 7/481** (2006.01) **G01S 7/493** (2006.01)
**G01S 17/26** (2020.01) **G01S 17/34** (2020.01)
**G01S 17/58** (2006.01) **G01S 17/89** (2020.01)

(52) Cooperative Patent Classification (CPC):
**G01S 7/493; G01S 7/4817; G01S 7/4818;**
**G01S 17/26; G01S 17/34; G01S 17/58; G01S 17/89**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.10.2020 RU 2020133315**
**15.09.2021 US 202117476444**

(71) Applicant: **YANDEX SELF DRIVING GROUP LLC**
**Moscow, Skolkovo 121205 (RU)**

(72) Inventors:
• **GOLIKOV, Andrey Victorovich**
**124536 Moscow, Zelenograd (RU)**
• **ORLOV, Nikolay Evgenevich**
**427967 Sarapul, Udmurtskaya Resp (RU)**
• **SOLOMENTSEV, Dmitry Valentinovich**
**127549 Moscow (RU)**
• **KUZNETSOV, Vladimir Albertovich**
**121614 Moscow (RU)**

(74) Representative: **BCF Global**
**Centre d'Entreprise et d'Innovation**
**56, Bd Niels Bohr**
**CS 52132**
**69603 Villeurbanne Cedex (FR)**

(54) **LIDAR SYSTEM AND METHOD WITH COHERENT DETECTION**

(57) A time-of-flight LIDAR system (300) includes a laser source (302) emitting light within a narrow-band range; a fast switch module (390) emitting pulses of the light beam into a first optical path (314), and remaining light of the light beam into a second optical path (315); a scanning unit (308) configured to scan the pulses out of the system (300) toward surrounding objects; at least one optical element configured to combine the remaining light in the second optical path and a reflected signal reflected into the system (300) from the surrounding objects; a detecting unit (306) configured to receive the combined signal; and a controller (310) configured to process electronic signals, from the detecting unit (306), derived from the combined signal, to determine a distance (318) of at least one object of the surrounding objects based on a time-of-flight calculated from processing the electronic signals derived from the combined signal.

Figure 3

EP 3 982 153 A1

**Description**

**TECHNICAL FIELD**

The present technology relates generally to Light Detection and Ranging (LiDAR) systems; and in particular, to systems and methods for scanning surroundings using coherent detection.

**BACKGROUND**

LiDAR systems (Light Detection and Ranging systems, also referred to as LIDAR or Lidar systems) are widely used in self-driving (autonomous) vehicles. LiDAR systems allow measurement of distances between the system and surrounding objects by irradiating the surroundings with light and collecting light reflected from one or more objects in the surroundings.

In a typical time of flight (ToF) LiDAR system, a light source emits a plurality of pulsed narrow laser beams across a field of view. Light reflected and/or scattered from an object in the field of view is received by a detection unit of the LiDAR system to determine a position of the object. For ToF systems, time between (i) emission of the light beam and (ii) detection of the reflected and/or scattered light beam is measured to determine the distance to the object.

The reflected beams received by the LiDAR are processed to generate data points using a central computer, each pulse of the beam mapping to one data point in a point cloud representing the surrounding environment as a 3D map. As the 3D map is more or less detailed and accurate depending on the density or refresh rate of the point cloud, generally speaking, the greater the sampling rate over the field of view, the more detailed and accurate is the 3D map.

Depending on various factors in the surroundings to be scanned by the LiDAR system (for example environmental conditions), the reflected and scattered light being detected to measure distance to surrounding objects can sometimes be weak. For some weak signals, noise in the 3D map or false detection can be an issue. In some cases, power (*i.e.* irradiance or intensity) of the light pulses emitted by the system can be increased, although the maximum power of the emitted light pulses may be limited, such as for eye-safety reasons. Increasing output power also does not necessarily overcome noise issues in all cases.

**SUMMARY**

Therefore, there is a need for systems and methods which avoid, reduce or overcome the limitations of the prior art.

In accordance with broad aspects of the present technology, there is provided a time-of-flight LiDAR system using coherent detection for enhanced scanning of surroundings. In order to enhance weakly reflected or scattered signals from the surroundings for the present LiDAR system, at least some non-limiting embodiments of the present technology, a portion of narrow wavelength band laser light produced by the light source of the LiDAR system is sent to the detecting unit to optically interfere with reflected signals from the surroundings, in order to detect weak incoming signals using a coherent detection method. Specifically, a continuous wave light beam emitted by the light source is split into two beams by a fast switch module (such as an acousto-optic modulator or an electro-optic modulator): a first beam of narrow light pulses and a second beam of the remaining original light beam (minus the pulses directed into the first beam). The first beam of pulses is scanned across the field of view of the system by the scanning unit. The second beam is directed to a detecting unit, where it is interfered with an incoming beam of light reflected from the surroundings. At the detecting unit, small signals can then be detected by measuring the interference signal at the detector, per standard coherent (heterodyne or homodyne) detection techniques. In this way, weaker reflected signals may be detected with reduced noise in the data, without the need to excessively increase power in the output beam.

In accordance with a first broad aspect of the present technology, there is provided a time-of-flight LIDAR system, including a laser source configured to emit a light beam within a narrow-band range; a fast switch module arranged to receive the light beam from the laser source, the fast switch module being configured to modulate an amplitude of the light beam to emit: pulses (also referred to herein as "short pulses") of the light beam into a first optical path, and remaining light of the light beam into a second optical path; a scanning unit arranged on the first optical path, the scanning unit being configured to scan the pulses of the light beam out of the system toward surrounding objects; at least one optical element configured to combine, into a combined signal: the remaining light of the light beam in the second optical path, and a reflected signal reflected into the system from the surrounding objects; a detecting unit configured to receive the combined signal; and a controller communicatively connected to the detecting unit, the controller being configured to process electronic signals, from the detecting unit, derived from the combined signal, the controller being configured to determine a distance of at least one object of the surrounding objects, the distance being determining based on a time-of-flight calculated from processing the electronic signals derived from the combined signal.

In some embodiments, the at least one optical element is a beam splitter.

In some embodiments, the fast switch module is an acousto-optic modulator (AOM).

In some embodiments, the controller is configured to determine the time-of-flight through a heterodyne detection technique.

In some embodiments, the system is a fibered system; and the at least one optical element is a fiber coupler.

In some embodiments, the detecting unit comprises a photodetector communicatively connected to the controller.

In some embodiments, the detecting unit comprises a first photodetector and a second photodetector, the first and second photodetectors being arranged to each receive at least a portion of the combined signal.

In some embodiments, the system further includes an optical amplifier disposed operatively between the fast switch module and the scanning unit, the optical amplifier being configured and arranged to amplify an intensity of the pulses of the light beam.

In some embodiments, the fast switch module is an electro-optic modulator (EOM).

In accordance with a second broad aspect of the present technology, there is provided a method for controlling an optical system, the method including causing, by a controller, a laser source to emit a light beam within a narrow-band range; controlling, by the controller, a fast switch module to modulate an amplitude of the light beam to emit, in at least two directions: pulses of the light beam, and remaining light of the light beam; causing, by the controller, a scanning unit to scan the pulses of the light beam out of the system toward surrounding objects; receiving, by the controller, electronic signals from a detecting unit receiving a combined signal, the combined signal being a combination of: the remaining light of the light, and a reflected signal reflected into the system from the surrounding objects; and determining, by the controller, a distance of at least one object of the surrounding objects, the distance being determined based on a time-of-flight calculated from processing the electronic signals derived from the combined signal.

In some embodiments, controlling the fast switch module comprises controlling, by the controller, an acousto-optic modulator (AOM).

In some embodiments, determining the time-of-flight by the controller includes determining the time-of-flight with a heterodyne detection technique.

In some embodiments, the method further includes causing, by the controller, an optical amplifier to amplify an intensity of the pulses of the light beam, the optical amplifier being disposed operatively between the fast switch module and the scanning unit.

In the context of the present specification, the term "light source" broadly refers to any device configured to emit radiation such as a radiation signal in the form of a beam, for example, without limitation, a light beam including radiation of one or more respective wavelengths within the electromagnetic spectrum. In one example, the light source can be a "laser source". Thus, the light source could include a laser such as a solid-state laser, laser diode, a high-power laser, or an alternative light source such as, a light emitting diode (LED)-based light source. Some (non-limiting) examples of the laser source include: a Fabry-Perot laser diode, a quantum well laser, a distributed Bragg reflector (DBR) laser, a distributed feedback (DFB) laser, a fiber-laser, or a vertical-cavity surface-emitting laser (VCSEL). In some non-limiting examples, the laser source may include a laser diode configured to emit light at a wavelength between about 650 nm and 1150 nm. Alternatively, the light source may include a laser diode configured to emit light beams at a wavelength between about 800 nm and about 1000 nm, between about 850 nm and about 950 nm, between about 1300 nm and about 1600 nm, or in between any other suitable range. Unless indicated otherwise, the term "about" with regard to a numeric value is defined as a variance of up to 10% with respect to the stated value.

In the context of the present specification, an "output beam" may also be referred to as a radiation beam, such as a light beam, that is generated by the radiation source and is directed downrange towards a region of interest. The output beam may have one or more parameters such as: beam duration, beam angular dispersion, wavelength, instantaneous power, photon density at different distances from light source, average power, beam power intensity, beam width, beam repetition rate, beam sequence, pulse duty cycle, wavelength, or phase etc. The output beam may be unpolarized or randomly polarized, may have no specific or fixed polarization (e.g., the polarization may vary with time), or may have a particular polarization (e.g., linear polarization, elliptical polarization, or circular polarization).

In the context of the present specification, an "input beam" is radiation or light entering the system, generally after having been reflected from one or more objects in the ROI. The "input beam" may also be referred to as a radiation beam or light beam. By reflected is meant that at least a portion of the output beam incident on one or more objects in the ROI, bounces off the one or more objects. The input beam may have one or more parameters such as: time-of-flight (i.e., time from emission until detection), instantaneous power (e.g., power signature), average power across entire return pulse, and photon distribution/signal over return pulse period etc. Depending on the particular usage, some radiation or light collected in the input beam could be from sources other than a reflected output beam. For instance, at least some portion of the input beam could include light-noise from the surrounding environment (including scattered sunlight) or other light sources exterior to the present system.

In the context of the present specification, the term "surroundings" of a given vehicle refers to an area or a volume around the given vehicle including a portion of a current environment thereof accessible for scanning using one or more sensors mounted on the given vehicle, for example, for generating a 3D map of the such surroundings or detecting objects therein.

In the context of the present specification, a "Region of Interest" may broadly include a portion of the observable environment of a LiDAR system in which the one or more objects may be detected. It is noted that the region of interest of the LiDAR system may be affected by various conditions such as but not limited to: an orientation of the LiDAR system (e.g. direction of an optical axis of the LiDAR system); a position of the LiDAR system with respect to the environment (e.g. distance above ground and adjacent topography and obstacles); operational parameters of the LiDAR system (e.g. emission power, computational settings, defined angles of operation), etc. The ROI of LIDAR system may be defined, for example, by a plane angle or a solid angle. In one example, the ROI may also be defined within a certain distance range (e.g. up to 200 m or so).

In the context of the present specification, a "server" is a computer program that is running on appropriate hardware and is capable of receiving requests (e.g. from electronic devices) over a network, and carrying out those requests, or causing those requests to be carried out. The hardware may be implemented as one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "electronic device" is any computer hardware that is capable of running software appropriate to the relevant task at hand. In the context of the present specification, the term "electronic device" implies that a device can function as a server for other electronic devices, however it is not required to be the case with respect to the present technology. Thus, some (non-limiting) examples of electronic devices include self-driving unit, personal computers (desktops, laptops, netbooks, etc.), smart phones, and tablets, as well as network equipment such as routers, switches, and gateways. It should be understood that in the present context the fact that the device functions as an electronic device does not mean that it cannot function as a server for other electronic devices.

In the context of the present specification, the expression "information" includes information of any nature or kind whatsoever capable of being stored in a database. Thus information includes, but is not limited to visual works (e.g. maps), audiovisual works (e.g. images, movies, sound records, presentations etc.), data (e.g. location data, weather data, traffic data, numerical data, etc.), text (e.g. opinions, comments, questions, messages, etc.), documents, spreadsheets, etc.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the words "first", "second", "third", etc. have been used as adjectives only for the purpose of allowing for distinction between the nouns that they modify from one another, and not for the purpose of describing any particular relationship between those nouns. Further, as is discussed herein in other contexts, reference to a "first" element and a "second" element does not preclude the two elements from being the same actual real-world element.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

## BRIEF DESCRIPTION OF THE DRAWINGS

These and other features, aspects and advantages of the present technology will become better understood with regard to the following description, appended claims and accompanying drawings where:

Figure 1 depicts a schematic diagram of an example computer system configurable for implementing certain non-limiting embodiments of the present technology;

Figure 2 depicts a schematic diagram of a networked computing environment being suitable for use with certain non-limiting embodiments of the present technology;

Figure 3 depicts a schematic diagram of a LiDAR system implemented in accordance with certain non-limiting embodiments of the present technology;

Figure 4 schematically depicts two beam paths of the LiDAR system of Figure 3; and

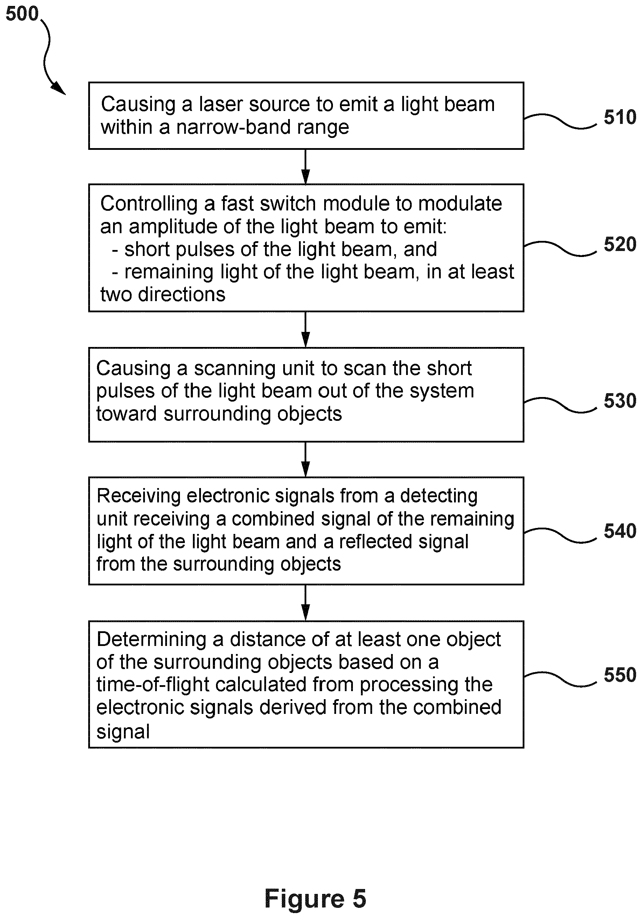

Figure 5 depicts a flowchart of a method implemented in accordance with certain non-limiting embodiments of the present technology.

It should be noted that the Figures are not drawn to scale unless otherwise indicated.

## DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

## Computer System

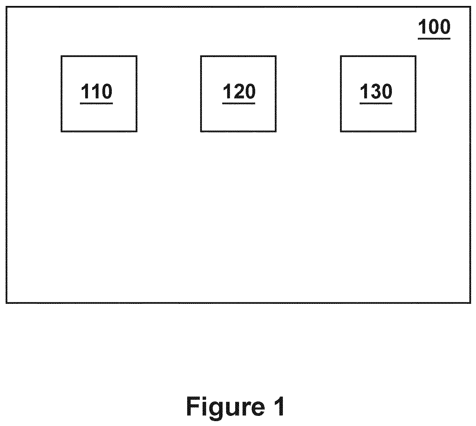

Referring initially to Figure 1, there is depicted a schematic diagram of a computer system 100 suitable for use with some implementations of the present technology. The computer system 100 includes various hardware components including one or more single or multi-core processors collectively represented by a processor 110, a solid-state drive 120, and a memory 130, which may be a random-access memory or any other type of memory.

Communication between the various components of the computer system 100 may be enabled by one or more internal and/or external buses (not shown) (e.g. a PCI bus, universal serial bus, IEEE 1394 "Firewire" bus, SCSI bus, Serial-ATA bus, etc.), to which the various hardware components are electronically coupled. According to embodiments of the present technology, the solid-state drive 120 stores program instructions suitable for being loaded into the memory 130 and executed by the processor 110 for determining a presence of an object. For example, the program instructions may be part of a vehicle control application executable by the processor 110. It is noted that the computer system 100 may have additional and/or optional components (not depicted), such as network communication modules, localization modules, and the like.

**Networked Computing Environment**

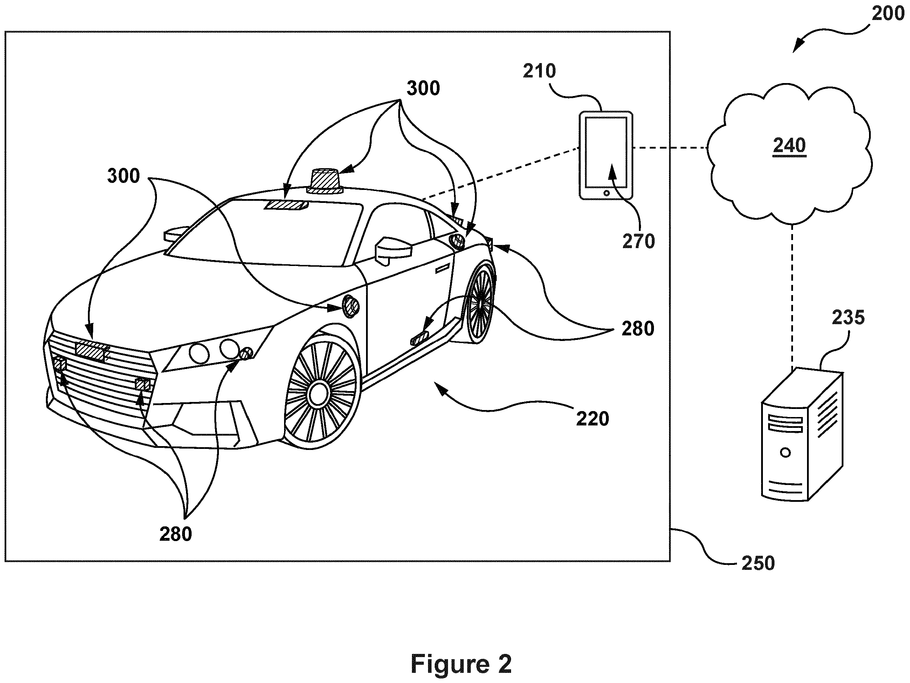

With reference to Figure 2, there is depicted a networked computing environment 200 suitable for use with some non-limiting embodiments of the present technology. The networked computing environment 200 includes an electronic device 210 associated with a vehicle 220 and/or associated with a user (not depicted) who is associated with the vehicle 220 (such as an operator of the vehicle 220). The networked computing environment 200 also includes a server 235 in communication with the electronic device 210 via a communication network 240 (e.g. the Internet or the like, as will be described in greater detail herein below).

In some non-limiting embodiments of the present technology, the networked computing environment 200 could include a GPS satellite (not depicted) transmitting and/or receiving a GPS signal to/from the electronic device 210. It will be understood that the present technology is not limited to GPS and may employ a positioning technology other than GPS. It should be noted that the GPS satellite can be omitted altogether.

The vehicle 220, to which the electronic device 210 is associated, could be any transportation vehicle, for leisure or otherwise, such as a private or commercial car, truck, motorbike or the like. Although the vehicle 220 is depicted as being a land vehicle, this may not be the case in each and every non-limiting embodiment of the present technology. For example, in certain non-limiting embodiments of the present technology, the vehicle 220 may be a watercraft, such as a boat, or an aircraft, such as a flying drone.

The vehicle 220 may be user operated or a driver-less vehicle. In some non-limiting embodiments of the present technology, it is contemplated that the vehicle 220 could be implemented as a Self-Driving Car (SDC). It should be noted that specific parameters of the vehicle 220 are not limiting, these specific parameters including for example: vehicle manufacturer, vehicle model, vehicle year of manufacture, vehicle weight, vehicle dimensions, vehicle weight distribution, vehicle surface area, vehicle height, drive train type (e.g. 2x or 4x), tire type, brake system, fuel system, mileage, vehicle identification number, and engine size.

According to the present technology, the implementation of the electronic device 210 is not particularly limited. For example, the electronic device 210 could be implemented as a vehicle engine control unit, a vehicle CPU, a vehicle navigation device (e.g. TomTom™, Garmin™), a tablet, a personal computer built into the vehicle 220, and the like. Thus, it should be noted that the electronic device 210 may or may not be permanently associated with the vehicle 220. Additionally or alternatively, the electronic device 210 could be implemented in a wireless communication device such as a mobile telephone (e.g. a smart-phone or a radio-phone). In certain embodiments, the electronic device 210 has a display 270.

The electronic device 210 could include some or all of the components of the computer system 100 depicted in Figure 1, depending on the particular embodiment. In certain embodiments, the electronic device 210 is an on-board computer device and includes the processor 110, the solid-state drive 120 and the memory 130. In other words, the electronic device 210 includes hardware and/or software and/or firmware, or a combination thereof, for processing data as will be described in greater detail below.

In some non-limiting embodiments of the present technology, the communication network 240 is the Internet. In alternative non-limiting embodiments of the present technology, the communication network 240 can be implemented as any suitable local area network (LAN), wide area network (WAN), a private communication network or the like. It should be expressly understood that implementations for the communication network 240 are for illustration purposes only. A communication link (not separately numbered) is provided between the electronic device 210 and the communication network 240, the implementation of which will depend, *inter alia,* on how the electronic device 210 is implemented. Merely as an example and not as a limitation, in those non-limiting embodiments of the present technology where the electronic device 210 is implemented as a wireless communication device such as a smartphone or a navigation device, the communication link can be implemented as a wireless communication link. Examples of wireless communication links may include, but are not limited to, a 3G communication network link, a 4G communication network link, and the like. The communication network 240 may also use a wireless connection with the server 235.

In some embodiments of the present technology, the server 235 is implemented as a computer server and could include some or all of the components of the computer system 100 of Figure 1. In one non-limiting example, the server 235 is implemented as a Dell™ PowerEdge™ Server running the Microsoft™ Windows Server™ operating system, but can also be implemented in any other suitable hardware, software, and/or firmware, or a combination thereof. In the depicted non-limiting embodiments of the present technology, the server 235 is a single server. In alternative non-limiting embodiments of the present technology, the functionality of the server 235 may be distributed and may be implemented via multiple servers (not shown).

In some non-limiting embodiments of the present technology, the processor 110 of the electronic device 210 could be in communication with the server 235 to receive one or more updates. Such updates could include, but are not limited to, software updates, map updates, routes updates, weather updates, and the like. In some non-limiting embodiments of the present technology, the processor 110 can also be configured to transmit to the server 235 certain operational data, such as routes travelled, traffic data, performance data, and the like. Some or all such data transmitted between the vehicle 220 and the server 235 may be encrypted and/or anonymized.

It should be noted that a variety of sensors and systems may be used by the electronic device 210 for gathering information about surroundings 250 of the vehicle 220. As seen in Figure 2, the vehicle 220 may be equipped with a plurality of sensor systems 280. It should be noted that different sensor systems from the plurality of sensor systems 280 may be used for gathering different types of data regarding the surroundings 250 of the vehicle 220.

In one example, the plurality of sensor systems 280 may include various optical systems including, *inter alia,* one or more camera-type sensor systems that are mounted to the vehicle 220 and communicatively coupled to the processor 110 of the electronic device 210. Broadly speaking, the one or more camera-type sensor systems may be configured to gather image data about various portions of the surroundings 250 of the vehicle 220. In some cases, the image data provided by the one or more camera-type sensor systems could be used by the electronic device 210 for performing object detection procedures. For example, the electronic device 210 could be configured to feed the image data provided by the one or more camera-type sensor systems to an Object Detection Neural Network (ODNN) that has been trained to localize and classify potential objects in the surroundings 250 of the vehicle 220.

In another example, the plurality of sensor systems 280 could include one or more radar-type sensor systems that are mounted to the vehicle 220 and communicatively coupled to the processor 110. Broadly speaking, the one or more radar-type sensor systems may be configured to make use of radio waves to gather data about various portions of the surroundings 250 of the vehicle 220. For example, the one or more radar-type sensor systems may be configured to gather radar data about potential objects in the surroundings 250 of the vehicle 220, such data potentially being representative of a distance of objects from the radar-type sensor system, orientation of objects, velocity and/or speed of objects, and the like.

It should be noted that the plurality of sensor systems 280 could include additional types of sensor systems to those non-exhaustively described above and without departing from the scope of the present technology.

## LiDAR System

According to the present technology and as is illustrated in Figure 2, the vehicle 220 is equipped with at least one Light Detection and Ranging (LiDAR) system, such as a LiDAR system 300 (described in further detail below) for gathering information about surroundings 250 of the vehicle 220. While only described herein in the context of being attached to the vehicle 220, it is also contemplated that the LiDAR system 300 could be a stand-alone operation or connected to another system.

Depending on the embodiment, the vehicle 220 could include more or fewer LiDAR systems 300 than illustrated. Depending on the particular embodiment, choice of inclusion of particular ones of the plurality of sensor systems 280 could depend on the particular embodiment of the LiDAR system 300. The LiDAR system 300 could be mounted, or retrofitted, to the vehicle 220 in a variety of locations and/or in a variety of configurations.

For example, depending on the implementation of the vehicle 220 and the LiDAR system 300, the LiDAR system 300 could be mounted on an interior, upper portion of a windshield of the vehicle 220. Nevertheless, as illustrated in Figure 2, other locations for mounting the LiDAR system 300 are within the scope of the present disclosure, including on a back window, side windows, front hood, rooftop, front grill, front bumper or the side of the vehicle 220. In some cases, the LiDAR system 300 can even be mounted in a dedicated enclosure mounted on the top of the vehicle 220.

In some non-limiting embodiments, such as that of Figure 2, a given one of the plurality of LiDAR systems 300 is mounted to the rooftop of the vehicle 220 in a rotatable configuration. For example, the LiDAR system 300 mounted to the vehicle 220 in a rotatable configuration could include at least some components that are rotatable 360 degrees about an axis of rotation of the given LiDAR system 300. When mounted in rotatable configurations, the given LiDAR system 300 could gather data about most of the portions of the surroundings 250 of the vehicle 220.

In some non-limiting embodiments of the present technology, such as that of Figure 2, the LiDAR systems 300 is mounted to the side, or the front grill, for example, in a non-rotatable configuration. For example, the LiDAR system 300 mounted to the vehicle 220 in a non-rotatable configuration could include at least some components that are not rotatable 360 degrees and are configured to gather data about pre-determined portions of the surroundings 250 of the vehicle 220.

Irrespective of the specific location and/or the specific configuration of the LiDAR system 300, it is configured to capture data about the surroundings 250 of the vehicle 220 used, for example, for building a multi-dimensional map of objects in the surroundings 250 of the vehicle 220. Details relating to the configuration of the LiDAR systems 300 to capture the data about the surroundings 250 of the vehicle 220 will now be described.

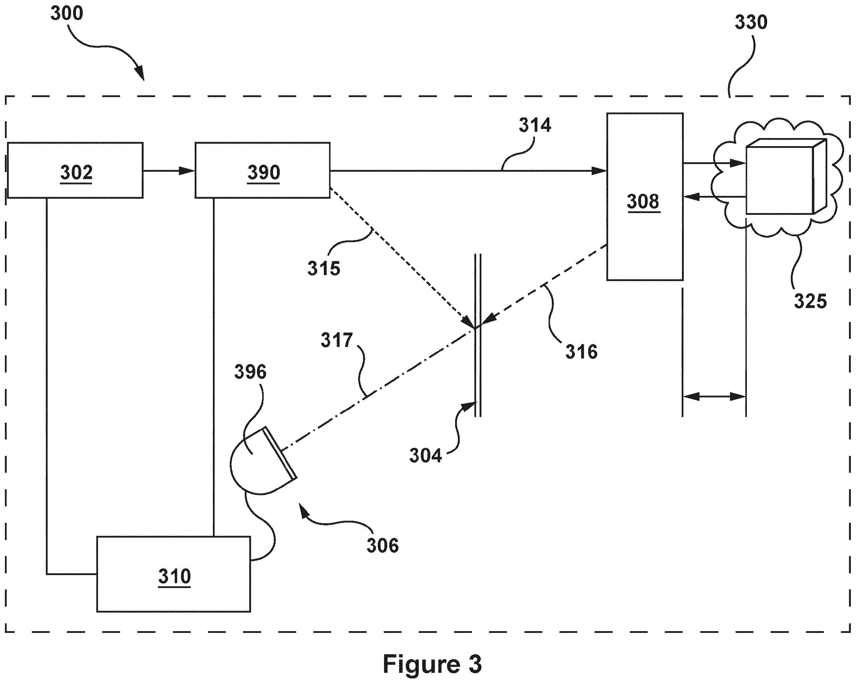

With reference to Figure 3, there is depicted a schematic diagram of one particular embodiment of the LiDAR system 300 implemented in accordance with certain non-limiting embodiments of the present technology.

Broadly speaking, the LiDAR system 300 includes a variety of internal components including, but not limited to: (i) a light source 302 (also referred to as a "laser source" or a "radiation source"), (ii) a beam splitting element 304 (also referred to as a "beam splitter"), (iii) a scanning unit 308 (also referred to as a "scanner assembly" or "scanner unit"), (iv) a detecting unit 306 (also referred to as a "detection system", "receiving unit", "receiving assembly", or a "detector"), and (v) a controller 310. It is contemplated that in addition to the components non-exhaustively listed above, the LiDAR system 300 could include a variety of sensors (such as, for example, a temperature sensor, a moisture sensor, etc.) which are omitted from Figure 3 for sake of clarity.

In certain non-limiting embodiments of the present technology, one or more of the internal components of the LiDAR system 300 are disposed in a common housing 330 as depicted in Figure 3. In some embodiments of the present technology, the controller 310 could be located outside of the common housing 330 and communicatively connected to the components therein.

According to non-limiting embodiments of the present technology, generally speaking, the LiDAR system 300 operates as follows. The light source 302 of the LiDAR system 300 emits a continuous laser beam in a narrow wavelength band; a fast switch module 390 separates the light from the light source 302 into pulses, i.e. short pulses, into a first optical path, forming an output beam 314, and a light beam 315 formed from the remaining light (that which is not in the pulses) is directed into a second optical path; the scanning unit 308 scans the output beam 314 across the surroundings 250 of the vehicle 220 for locating/capturing data of $\alpha$ *priori* unknown objects (such as an object 320). Light reflected from the unknown objects (such as the object 320) is received at the scanning unit 308 and is directed by the scanning unit 308 toward the detecting unit 306 (via a beam splitting element 304), forming an input beam 316. The remaining light beam 315 in the second optical path from the fast switch module 390 is also directed to the beam splitting element 304 and subsequently the detecting unit 306, such that the beams 315, 316 form a combined beam 317. The detecting unit 306 thus detects to combined beam 317, which is a coherent superposition of the remaining light beam 315 (a reference beam) and the input light beam 316 from the surroundings 250 (a signal beam carrying information about the surroundings 250). Electronic signals received at the controller 310 corresponding to the detected combined beam 317 are then used to determine a distance 318 to at least one object 320 to generate a multi-dimensional map of the surroundings 250 where objects (including the object 320) are represented in a form of one or more data points. Operation of the LiDAR system 300 will be described in more detail below.

As certain non-limiting examples, the object 320 may include all or a portion of a person, vehicle, motorcycle, truck, train, bicycle, wheelchair, pushchair, pedestrian, animal, road sign, traffic light, lane marking, road-surface marking, parking space, pylon, guard rail, traffic barrier, pothole, railroad crossing, obstacle in or near a road, curb, stopped vehicle on or beside a road, utility pole, house, building, trash can, mailbox, tree, any other suitable object, or any suitable combination of all or part of two or more objects.

For example, for the object 320 is located at the distance 318 from the LiDAR system 300. Once the output beam 314 reaches the object 320, the object 320 generally reflects and/or scattered at least a portion of light from the output beam 314, and some of the reflected and/or scattered light beams may return back towards the LiDAR system 302, to be received in the form of the input beam 316. By reflecting, it is meant that at least a portion of light beam from the output beam 314 bounces off the object 320. A portion of the light beam from the output beam 314 may be absorbed or scattered by the object 320.

Details relating to the use and implementations of the components of the LiDAR system 300, in accordance with certain non-limiting embodiments of the present technology, will be described immediately below.

**Light Source**

The light source 302 is communicatively coupled to the controller 310 and is configured to emit light having a given operating wavelength. To that end, in certain non-limiting embodiments of the present technology, the light source 302 includes at least one laser preconfigured for operation at the given operating wavelength. As will be described in more detail below, the light source 302 according to the present technology is a constant laser source 302, *i.e.* the laser source 302 produces a continuous beam, and is not pulsed laser as is generally the case for time-of-flight LiDAR systems.

The given operating wavelength of the light source 302 may be in the infrared, visible, and/or ultraviolet portions of the electromagnetic spectrum. For example, the light source 302 may include at least one laser with an operating wavelength between about 650 nm and 1150 nm. Alternatively, the light source 302 may include a laser diode configured to emit light at a wavelength between about 800 nm and about 1000 nm, between about 850 nm and about 950 nm, or between about 1300 nm and about 1600 nm.

The light source 302 of the LiDAR system 300 is generally an eye-safe laser, or put another way, the LiDAR system 300 may be classified as an eye-safe laser system or laser product. Broadly speaking, an eye-safe laser, laser system, or laser product may be a system with some or all of: an emission wavelength, average power, peak power, peak intensity, pulse energy, beam size, beam divergence, exposure time, or scanned output beam such that emitted light from this system presents little or no possibility of causing damage to a person's eyes.

According to certain non-limiting embodiments of the present technology, the operating wavelength of the light source 302 may lie within portions of the electromagnetic spectrum that correspond to light produced by the Sun. Therefore, in some cases, sunlight may act as background noise, which can obscure the light signal detected by the LiDAR system 300. This solar background noise can result in false-positive detections and/or may otherwise corrupt measurements of the LiDAR system 300. Although it may be feasible in some cases to increase a Signal-to-Noise Ratio (SNR) of the LiDAR system 300 by increasing the power level of the output beam 314, this may not be desirable in at least some situations. For example, it may not in some implementations be desirable to increase power levels of the emitted light to levels beyond eye-safe thresholds.

In some non-limiting embodiments of the present technology, the light source 302 could include one or more laser diodes, including but not limited to: Fabry-Perot laser diode, a quantum well laser, a distributed Bragg reflector (DBR) laser, a distributed feedback (DFB) laser, or a vertical-cavity surface-emitting laser (VCSEL). Just as examples, a given laser diode operating in the light source 302 may be an aluminum-gallium-arsenide (AlGaAs) laser diode, an indium-gallium-arsenide (InGaAs) laser diode, or an indium-gallium-arsenide-phosphide (InGaAsP) laser diode, or any other suitable laser diode.

In some non-limiting embodiments of the present technology, the light source 302 is generally configured to emit a light beam that is a collimated optical beam, but it is contemplated that the beam produced could have any suitable beam divergence for a given application. Broadly speaking, divergence of the emitted light beam is an angular measure of an increase in beam cross-section size (e.g., a beam radius or beam diameter) as the light travels away from the light source 302 or the LiDAR system 300. In some non-limiting embodiments of the present technology, the emitted light beam may have a substantially circular cross-section.

It is also contemplated that the light beam emitted by light source 302 could be unpolarized or randomly polarized, could have no specific or fixed polarization (e.g., the polarization may vary with time), or could have a particular polarization (e.g., the output beam 314 may be linearly polarized, elliptically polarized, or circularly polarized).

**Fast Switch Module**

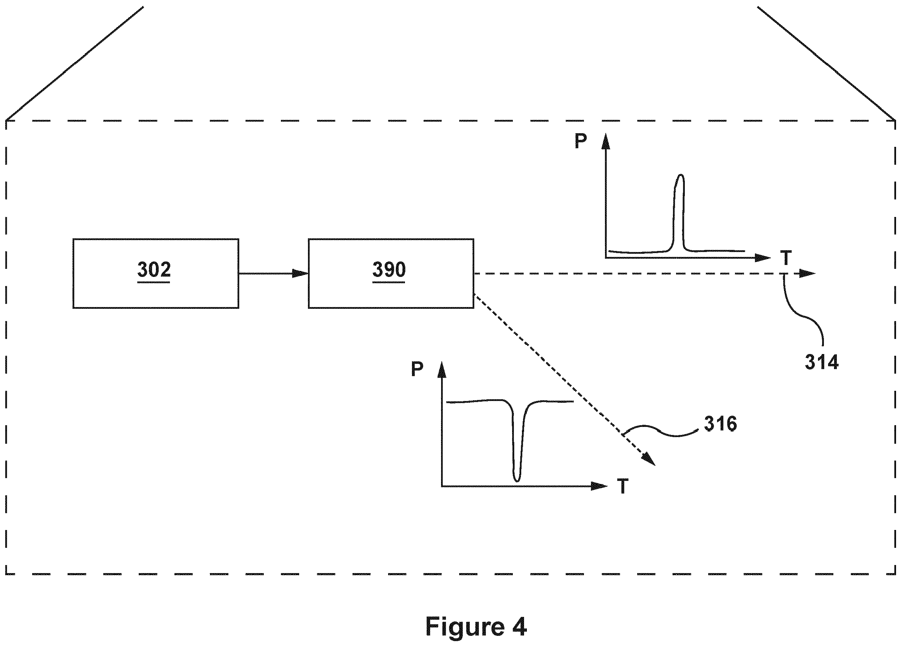

According to the present technology and with further reference to Figure 4, the LiDAR system 300 includes a fast switch module 390 for modulating the light beam emitted by the light source 302. Specifically, the module 390 is arranged to receive the continuous light beam of narrow wavelength bandwidth from the light source 302.

As is mentioned briefly above, the fast switch module 390 is configured and arranged to split the continuous beam received from the light source 302 into two beams: an output beam 314 formed from pulses emitted in a first direction along a first optical path and a reference beam 315, also referred to herein as the remaining light beam 315, into which all light not included in the pulses is sent into a second direction along a secondary optical path. Separation of the two beams 314, 315 is illustrated schematically in Figure 4, where the power of each beam 314, 315 is illustrated over pulse period. The fast switch module 390 rapidly switches between sending the light into the two beams 314, 315. It should be noted that the angle illustrated between the output beam 314 and the remaining light beam 315, *i.e.* between the first direction and the second direction, is simply illustrative example and not meant to be limiting.

In some non-limiting embodiments, the fast switch module 390 could be implemented an acousto-optic modulator (AOM). In such an implementation, the modulator 390 oscillates rapidly between transmitting pulses into the first direction and diffracting (in a first order diffraction) the remaining light into the second direction. In some embodiments, the orders of the pulsed beam 314 and the reference beam 315 could be reversed. Using the AOM 390, the reference beam 315 undergoes a slight frequency shift (on the order of tens of Hertz). In this way, in at least some non-limiting embodiments of the present technology, a heterodyne detection technique can be employed by the controller 310 to determine the time-of-flight for even weakly reflected signals, as a beat frequency signal component between the input beam 316 and the reference beam 315 will be present at the detecting unit 306 due to the small relative frequency difference between the emitted beams 314, 315.

In some non-limiting embodiments, the fast switch module 390 could be implemented as an electro-optic modulator (EOM). In such implementations, for example, the EOM 390 could be arranged in one branch of a Mach-Zehnder interferometer with 2x2 switches. In some non-limiting implementations, the EOM 390 could be controlled to rapidly switch between applying different phases to the light beam from the laser source 302, such the changing phase allows the light beam to be split between two paths of the interferometer. This way pulses could be sent to a first path to form the output beam 314 and the remaining light could be sent into a second interferometer path to form the secondary beam path 315.

It is noted that the EOM does not generally cause a frequency shift between the beams 314, 315. Thus in some non-limiting embodiments implementing the EOM, the controller 310 could employ a homodyne detection technique where the controller 310 would detect a relative phase change between the input beam 316 and the reference beam 315. In some non-limiting embodiments, a balanced coherent detection regime could be implemented to help reduce noise, for instance with the inclusion of a secondary photodetector.

In at least some non-limiting embodiments of the present technology, the LiDAR system 300 could further include an optical amplifier for amplifying the pulses of the output beam 314.

**Beam Splitting Element**

With continued reference to Figure 3, there is further provided the beam splitting element 304 disposed in the housing 330. While commonly known as a beam "splitting" element, the beam splitting element 304 is utilized in non-limiting embodiments of the present technology for combining the input beam 316 (entering the LiDAR system 300 from the surroundings 250) with the remaining light beam 315, directed toward the beam splitting element 304 from the fast switch module 390, into the combined beam 317. The beam splitting element 304 is arranged and configured to direct the combined beam 317 toward the detecting unit 306 for further processing thereof by the controller 310.

It should be noted that the beam splitting element 304 does generally divide intensity (optical power) incident thereupon into two directions (or two fibers in the case of fiber couplers). In some non-limiting embodiments of the present technology, the beam splitting element 304 thus generally forms two combined beams 317. According to the present non-limiting embodiment, only one combined beam 317 is utilized and will be therefore be discussed herein. It is also contemplated that both combined beams 317 could be used in a balanced detection technique.

Depending on the particular embodiment, the beam splitting element 304 may be configured to divide the intensity of light incident thereupon equally. However, in other non-limiting embodiments of the present technology, the beam splitting element 304 may be configured to divide the intensity of the output beam 314 at any predetermined splitting ratio. For example, the beam splitting element 304 may be configured to direct up to 80% of the intensity of the light incident thereupon in a first direction, and the remainder of up to 20% of the intensity of the light incident in a second direction. In yet other non-limited embodiments of the present technology, the beam splitting element 304 may be configured to vary the splitting ratio of the light incident thereupon (for example, from 1% to 95% of the intensity of the light incident thereupon).

Depending on the implementation of the LiDAR system 300, the beam splitting element 304 could be provided in a variety of forms, including but not limited to: a glass prism-based beam splitter component, a half-silver mirror-based beam splitter component, a dichroic mirror prism-based beam splitter component, and the like. For a fibered-implementations of the LiDAR system 300, the beam splitting element 304 could be implemented as a fiber-optic-based beam splitter component, such as a 50-50 fiber coupler.

**Internal Beam Paths**

As is schematically depicted in Figures 3 and 4, the LiDAR system 300 forms a plurality of internal beam paths along which light within the LiDAR system 300 propagate. As is mentioned above, laser light emitted by the light source 302 is modulated by the fast switch module 390 to produce two beams: the output beam 314 and the reference beam 315. The output beam 314 is directed to the scanning unit 308 (described in more detail below), which scans the output beam 314 over the field of view of the LiDAR system 300. Light reflected and/or scattered by objects in the surroundings 250 then re-enters the LiDAR system 300 through the scanning unit 308 as the input beam 316.

The input beam 316 is then directed through the beam splitting element 304, toward the detecting unit 306, by the scanning unit 308 and/or additional optical elements. In some implementations, the LiDAR system 300 could be arranged with beam paths that direct the input beam 316 directly from the surroundings 250 to the detecting unit 306 (without the input beam 316 passing through the scanning unit 308).

The reference beam 315, with the remaining light other than the pulses, is directed from the fast switch module 390 toward the beam splitting element 304. Depending on the implementation, the reference beam 315 could be directed directly to the beam splitting element 304 (for example, via an optical fiber) or the LiDAR system 300 could include additional optical elements to direct the reference beam 315 toward the beam splitting element 304.

At the beam splitting element 304, the input beam 316 and the reference beam 315 are coherently superimposed to form the combined beam 317. The detecting unit 306 then receives the combined beam 317. It is contemplated that the combined beam 317 could be directed between the beam splitting element 304 and the detecting unit 306 by additional optical elements.

While it can be seen that, at any given point in time, light is only emitted into one of the beams 314, 315, it is noted that interference of the combined beam 317 at the detecting unit 306 is possible due to the additional distance (and thus time) traveled by the pulses of the output/input beams 314, 316 relative to the reference beam 315.

It should be noted that, in various non-limiting embodiments of the present technology, the plurality of internal beam paths may include a variety of optical components. For example, the LiDAR system 300 may include one or more optical components configured to condition, shape, filter, modify, steer, or direct the light within the LiDAR system 300, for example the output beam 314 and/or the input beam 316. For example, the LiDAR system 300 may include one or more lenses, mirrors, filters (e.g., band pass or interference filters), optical fibers, circulators, beam splitters, polarizers, polarizing beam splitters, wave plates (e.g., half-wave or quarter-wave plates), diffractive elements, microelectromechanical (MEM) elements, collimating elements, or holographic elements.

It is contemplated that in at least some non-limiting embodiments of the present technology, the given internal beam path and the other internal beam path from the plurality of internal beam paths may share at least some common optical components, however, this might not be the case in each and every embodiment of the present technology.

## Scanning Unit

Generally speaking, the scanning unit 308 steers the output beam 314 in one or more directions downrange towards the surroundings 250. The scanning unit 308 is communicatively coupled to the controller 310. As such, the controller 310 is configured to control the scanning unit 308 so as to guide the output beam 314 in a desired direction downrange and/or along a predetermined scan pattern. Broadly speaking, in the context of the present specification "scan pattern" may refer to a pattern or path along which the output beam 314 is directed by the scanning unit 308 during operation.

In certain non-limiting embodiments of the present technology, the controller 310 is configured to cause the scanning unit 308 to scan the output beam 314 over a variety of horizontal angular ranges and/or vertical angular ranges; the total angular extent over which the scanning unit 308 scans the output beam 314 is referred to herein as the field of view (FoV). It is contemplated that the particular arrangement, orientation, and/or angular ranges could depend on the particular implementation of the LiDAR system 300. The field of view generally includes a plurality of regions of interest (ROIs), defined as portions of the FoV which may contain, for instance, objects of interest. In some implementations, the scanning unit 308 can be configured to further investigate a selected region of interest (ROI) 325. The ROI 325 of the LiDAR system 300 may refer to an area, a volume, a region, an angular range, and/or portion(s) of the surroundings 250 about which the LiDAR system 300 may be configured to scan and/or can capture data.

It should be noted that a location of the object 320 in the surroundings 250 of the vehicle 220 may be overlapped, encompassed, or enclosed at least partially within the ROI 325 of the LiDAR system 300.

It should be noted that, according to certain non-limiting embodiments of the present technology, the scanning unit 308 may be configured to scan the output beam 314 horizontally and/or vertically, and as such, the ROI 325 of the LiDAR system 300 may have a horizontal direction and a vertical direction. For example, the ROI 325 may be defined by 45 degrees in the horizontal direction, and by 45 degrees in the vertical direction. In some implementations, different scanning axes could have different orientations.

In accordance with the non-limiting embodiments of the present technology, for scanning the output beam 314 over the ROI 325, the scanning unit 308 includes a pair of mirrors (not separately depicted), each one of which is independently coupled with a respective galvanometer (not separately depicted) providing control thereto. Accordingly, the controller 310 causes, via the respective galvanometers, rotation of each of the pair of mirrors about a respective one of mutually perpendicular axes associated therewith, thereby scanning the ROI 325 according to the predetermined scan pattern.

In certain non-limiting embodiments of the present technology, the scanning unit 308 may further include a variety of other optical components and/or mechanical-type components for performing the scanning of the output beam 314. For example, the scanning unit 308 may include one or more mirrors, prisms, lenses, MEM components, piezoelectric components, optical fibers, splitters, diffractive elements, collimating elements, and the like. It should be noted that the scanning unit 308 may also include one or more additional actuators (not separately depicted) driving at least some of the other optical components to rotate, tilt, pivot, or move in an angular manner about one or more axes, for example.

The LiDAR system 300 may thus make use of the predetermined scan pattern to generate a point cloud substantially covering the ROI 325 of the LiDAR system 300. This point cloud of the LiDAR system 300 may be used to render a multi-dimensional map of objects in the surroundings 250 of the vehicle 220. In certain non-limiting embodiments of the present technology, the predetermined scan pattern for scanning the ROI 325 may be associated with a respective scanning frequency.

## Detecting Unit

According to certain non-limiting embodiments of the present technology, the detecting unit 306 is communicatively coupled to the controller 310 and may be implemented in a variety of ways. According to the present technology, the detecting unit 306 includes a photodetector 307, but could include (but is not limited to) a photoreceiver, optical receiver, optical sensor, detector, optical detector, optical fibers, and the like. As will be described in more detail below, in some non-limiting embodiments of the present technology, the detecting unit 306 is configured to acquire or detect at least a portion of the combined beam 317.

In some non-limiting embodiments, the detecting unit 306 may also include circuitry that performs signal amplification, sampling, filtering, signal conditioning, analog-to-digital conversion, time-to-digital conversion, pulse detection, threshold detection, rising-edge detection, falling-edge detection, and the like. For example, the detecting unit 306 may include electronic components configured to convert a received photocurrent (e.g., a current produced by an APD in response to a received optical signal) into a voltage signal. The detecting unit 306 may also include additional circuitry for producing an analog or digital output signal that corresponds to one or more characteristics (e.g., rising edge, falling edge, amplitude, duration, and the like) of a received optical pulse.

**Controller**

Depending on the implementation, the controller 310 may include one or more processors, an application-specific integrated circuit (ASIC), a field-programmable gate array (FPGA), and/or other suitable circuitry. The controller 310 may also include non-transitory computer-readable memory to store instructions executable by the controller 310 as well as data which the controller 310 may produce based on the signals acquired from other internal components of the LiDAR system 300 and/or may provide signals to the other internal components of the LiDAR system 300. The memory can include volatile (e.g., RAM) and/or non-volatile (e.g., flash memory, a hard disk) components. The controller 310 may be configured to generate data during operation and store it in the memory. For example, this data generated by the controller 310 may be indicative of the data points in the point cloud of the LiDAR system 300.

It is contemplated that, in at least some non-limiting embodiments of the present technology, the controller 310 could be implemented in a manner similar to that of implementing the electronic device 210 and/or the computer system 100, without departing from the scope of the present technology. In addition to collecting data from the detecting unit 306, the controller 310 could also be configured to provide control signals to, and potentially receive diagnostics data from, the light source 302 and the scanning unit 308.

As previously stated, the controller 310 is communicatively coupled to the light source 302, the fast switch module 390, the scanning unit 308, and the detecting unit 306. In some non-limiting embodiments of the present technology, the controller 310 may be configured to receive electrical trigger pulses from the fast switch module 390, where each electrical trigger pulse corresponds to the emission of an optical pulse by the light source 302. The controller 310 may further provide instructions, a control signal, and/or a trigger signal to the fast switch module 3 90indicating when the fast switch module 390is to produce optical pulses indicative, for example, of the output beam 314.

Just as an example, the controller 310 may be configured to send an electrical trigger signal that includes electrical pulses, so that the light source 302 begins emitting light, in response to the electrical trigger signal. It is also contemplated that the controller 310 may cause the light source 302 to adjust one or more characteristics of output beam 314 produced by the light source 302 such as, but not limited to: frequency, period, duration, pulse energy, peak power, average power, and wavelength of the optical pulses.

By the present technology, the controller 310 is configured to determine a "time-of-flight" value for an optical pulse in order to determine the distance between the LiDAR system 300 and one or more objects in the field of view, as is described briefly above. The time of flight is based on timing information associated with (i) a first moment in time when a given optical pulse (for example, of the output beam 314) is produced by the fast switch module 390, and (ii) a second moment in time when a portion of the given optical pulse (for example, from the input beam 316) was detected or received by the detecting unit 306. In some non-limiting embodiments of the present technology, the first moment may be indicative of a moment in time when the controller 310 emits a respective electrical pulse associated with the given optical pulse; and the second moment in time may be indicative of a moment in time when the controller 310 receives, from the detecting unit 306, an electrical signal generated in response to receiving the portion of the given optical pulse from the input beam 316.

By the present technology, the controller 310 determines when the return pulse from the input beam 316 arrives at the detecting unit 306 using coherent detection (heterodyne detection or homodyne detection) to extract the pulse from the combined beam 317. In this way, even weakly reflected or scattered pulses can be detected over what might be an otherwise noisy input beam signal. Specific methods and calculations of coherent (heterodyne or homodyne) detection are known in the art and will not be described in further detail herein.

By the present technology, the controller 310 is configured to determine, based on the first moment in time and the second moment in time, a time-of-flight value and/or a phase modulation value for the emitted pulse of the output beam 314. The time-of-light value $T$, in a sense, a "round-trip" time for the emitted pulse to travel from the LiDAR system 300 to the object 320 and back to the LiDAR system 300. The controller 310 is thus broadly configured to determine the distance 318 in accordance with the following equation:

$$D = \frac{c \cdot T}{2}, \qquad\qquad (1)$$

wherein $D$ is the distance 318, $T$ is the time-of-flight value, and c is the speed of light (approximately $3.0 \times 10^8$ m/s).

As previously alluded to, the LiDAR system 300 may be used to determine the distance 318 to one or more other potential objects located in the surroundings 250. By scanning the output beam 314 across a given region of interest (ROI) 325 of the LiDAR system 300 in accordance with the predetermined scan pattern, the controller 310 is configured to map distances (similar to the distance 318) to respective data points within the ROI 325 of the LiDAR system 300. As a result, the controller 310 is generally configured to render these data points captured in succession (e.g., the point cloud) in a form of a multi-dimensional map. In some implementations, data related to the determined time of flight and/or distances to objects could be rendered in different informational formats.

As an example, this multi-dimensional map may be used by the electronic device 210 for detecting, or otherwise identifying, objects or determining a shape or distance of potential objects within the ROI 325 of the LiDAR system 300. It is contemplated that the LiDAR system 300 may be configured to repeatedly/iteratively capture and/or generate point clouds at any suitable rate for a given application.

**Method for Controlling LiDAR** System

With reference to Figure 6, a flowchart of a method 500 for controlling the LiDAR system 300, the method 500 will now be described in more detail according to non-limiting embodiments of the present technology.

In some non-limiting embodiments of the present technology, the method 500 may be implemented by the controller 310 communicatively connected to the LiDAR system 300. As previously discussed that in at least some non-limiting embodiments of the present technology, the controller 310 may include one or more processors and may be implemented in a similar manner to the electronic device 210 and/or the computer system 100, without departing from the scope of the present technology. The method 500 begins at step 510.

**Step 510: causing a laser source to emit a light beam within a narrow-band range**

At step 510, the controller 310 provides instructions, a control signal, and/or a trigger signal to the light source 302 indicating that the light source 302 is to emit light within a narrow-band range, *i.e.* light with a small wavelength bandwidth, towards the scanning unit 308. As is mentioned above, the light source 302 is a laser source 302 in the present technology. The laser source 302 then produces a generally constant power or irradiation light beam.

**Step 520: controlling a fast switch module to modulate an amplitude of the light beam to emit: short pulses in a first direction and remaining light in a second direction**

At step 520, the controller 310 controls the fast switch module 390 to module the amplitude of the light produced by the laser source 302 in order to emit light into two directions. The fast switch module 390 produces a series of short pulses to form the output beam 314 in a first direction and directs the remaining light beam 315 in a second direction toward the beam splitting element 304. Depending on the non-limiting embodiment, the first and second directions may have any relative arrangement and is not limited to the arrangement depicted in the figures. For example, in some non-limiting embodiments, the beams 314, 315 could be emitted parallel to one another and then directed into fiber optic elements. Depending on the non-limiting embodiment, the controller 310 could control pulse length and/or pulse frequency of the output beam 314.

**Step 530: causing a scanning unit to scan the short pulses of the light beam out of the system toward surrounding objects**

At step 530, the controller 310 controls the scanning unit 308 to scan the output beam 314 of laser pulses outward toward the surroundings 250. The particular scan pattern and frequency will depend on the particular embodiment of the scanning unit 308, as well as the pulse length and pulse frequency of the output beam 314.

**Step 540: receiving electronic signals from a detecting unit receiving a combined signal of the remaining light of the light beam and a reflected signal from the surrounding objects**

At step 540, the controller 310 receives electronic signals from the detecting unit 306, corresponding the detection of the combined beam 317. The input beam 316 is directed by at least the scanning unit 308 toward the beam splitting element 304. At the beam splitting element 304, the input beam 314 and the remaining light beam 315 are combined and the combined beam 317 is directed to the photodetector 396 of the detecting unit 306. As is mentioned above, the photodetector 396 is a square-law photodetector to detect the linear superposition of the two beams 316, 317 waves. The controller 310 thus receives electric signals including at least a constant signal related to the sum of the beams 316, 317 and an oscillating signal corresponding to the product of the electric fields of the beams 316, 317.

**Step 550: determining a distance of at least one object of the surrounding objects based on a time-of-flight calculated from processing the electronic signals derived from the combined signal**

At step 550, the controller 310 determines (or calculates) the distance 318 to the at least one object 320. The controller 310 determines the time-of-flight of one or more pulses of the output beam 314 exiting the LiDAR system 300, reflecting off the at least one object 320, and arriving at the detecting unit 306.

As is mentioned above, the controller 310 determines the time-of-flight based on the electrical signals of the optical interference of the combined beam 317 at the photodetector 396, using a heterodyne detection technique. In some non-limiting embodiments of the method 500, the controller 310 could use related homodyne detection techniques. It is also contemplated that the method 500 could include, in some non-limiting embodiments, using additional photodetectors in order to apply a balanced coherent detection technique for determining time-of-flight.

It should be apparent to those skilled in the art that at least some embodiments of the present technology aim to expand a range of technical solutions for addressing a particular technical problem, namely improving signal quality for weak signals for a LiDAR system while limiting output power of the LiDAR system light source.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

While the above-described implementations have been described and shown with reference to particular steps performed in a particular order, it will be understood that some of these steps may be combined, sub-divided, or re-ordered without departing from the teachings of the present technology. Accordingly, the order and grouping of the steps is not a limitation of the present technology.

**Claims**

1.   A time-of-flight LIDAR system (300), comprising:

    a laser source (302) configured to emit a light beam within a narrow-band range;
    a fast switch module (390) arranged to receive the light beam from the laser source (302),
    the fast switch module (390) being configured to modulate an amplitude of the light beam to emit:

        pulses of the light beam into a first optical path (314), and
        remaining light of the light beam into a second optical path (315);

    a scanning unit (308) arranged on the first optical path, the scanning unit (308) being configured to scan the pulses of the light beam out of the system (300) toward surrounding objects;
    at least one optical element configured to combine, into a combined signal:

        the remaining light of the light beam in the second optical path, and
        a reflected signal reflected into the system (300) from the surrounding objects;

    a detecting unit (306) configured to receive the combined signal; and
    a controller (310) communicatively connected to the detecting unit (306), the controller (310) being configured to process electronic signals, from the detecting unit (306), derived from the combined signal,
    the controller (310) being configured to determine a distance (318) of at least one object of the surrounding objects, the distance (318) being determining based on a time-of-flight calculated from processing the electronic signals derived from the combined signal.

2.   The system (300) of claim 1, wherein the at least one optical element is a beam splitter.

3.   The system (300) of claim 1 or claim 2, wherein the fast switch module (390) is an acousto-optic modulator (AOM).

4. The system (300) of claim 3, wherein the controller (310) is configured to determine the time-of-flight through a heterodyne detection technique.

5. The system (300) of any of claims 1-4, wherein:

   the system (300) is a fibered system; and
   the at least one optical element is a fiber coupler.

6. The system (300) of any of claims 1-5, wherein the detecting unit (306) comprises a photodetector communicatively connected to the controller (310).

7. The system (300) of any of claims 1-6, wherein the detecting unit (306) comprises a first photodetector and a second photodetector, the first and second photodetectors being arranged to each receive at least a portion of the combined signal.

8. The system (300) of any of claims 1-7, further comprising an optical amplifier disposed operatively between the fast switch module (390) and the scanning unit (308), the optical amplifier being configured and arranged to amplify an intensity of the pulses of the light beam.

9. The system (300) of claim 1, wherein the fast switch module (390) is an electro-optic modulator (EOM).

10. A method (500) for controlling an optical system (300), the method (500) comprising:

    causing, by a controller (310), a laser source (302) to emit a light beam within a narrow-band range;
    controlling, by the controller (310), a fast switch module (390) to modulate an amplitude of the light beam to emit, in at least two directions:

    pulses of the light beam, and
    remaining light of the light beam;

    causing, by the controller (310), a scanning unit (308) to scan the pulses of the light beam out of the system toward surrounding objects;
    receiving, by the controller (310), electronic signals from a detecting unit (306) receiving a combined signal, the combined signal being a combination of:

    the remaining light of the light beam, and
    a reflected signal reflected into the system from the surrounding objects; and determining, by the controller (310), a distance (318) of at least one object of the surrounding objects, the distance (318) being determined based on a time-of-flight calculated from processing the electronic signals derived from the combined signal.

11. The method (500) of claim 10, wherein controlling the fast switch module (390) comprises controlling, by the controller (310), an acousto-optic modulator (AOM).

12. The method (500) of claim 10 or claim 11, wherein determining the time-of-flight by the controller (310) includes determining the time-of-flight with a heterodyne detection technique.

13. The method (500) of any of claims 10-12, further comprising causing, by the controller (310), an optical amplifier to amplify an intensity of the pulses of the light beam, the optical amplifier being disposed operatively between the fast switch module (390) and the scanning unit (308).

**Figure 1**

Figure 2

Figure 3

| 302 | → | 390 |

P

T

314

P

T

316

Figure 4

500

Causing a laser source to emit a light beam within a narrow-band range — 510

Controlling a fast switch module to modulate an amplitude of the light beam to emit:
- short pulses of the light beam, and
- remaining light of the light beam, in at least two directions — 520

Causing a scanning unit to scan the short pulses of the light beam out of the system toward surrounding objects — 530

Receiving electronic signals from a detecting unit receiving a combined signal of the remaining light of the light beam and a reflected signal from the surrounding objects — 540

Determining a distance of at least one object of the surrounding objects based on a time-of-flight calculated from processing the electronic signals derived from the combined signal — 550

## Figure 5

Europäisches
Patentamt
European
Patent Office
Office européen
des brevets

# EUROPEAN SEARCH REPORT

Application Number

EP 21 19 8075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/310372 A1 (CROUCH STEPHEN C [US] ET AL) 10 October 2019 (2019-10-10) * paragraphs [0047] - [0049], [0005], [0053] - [0055], [0058] - [0060], [0077]; figures 1,2a,2b,3b * ----- | 1,3,6-8, 10-13 | INV. G01S7/481 G01S7/493 G01S17/26 G01S17/34 G01S17/58 G01S17/89 |
| X | US 5 835 199 A (PHILLIPS MARK W [US] ET AL) 10 November 1998 (1998-11-10) * col. 5, line 51-col. 8, line 27 and col. 11, lines 16-41; figure 1 * ----- | 1-5,9-13 | |

TECHNICAL FIELDS
SEARCHED (IPC)

**G01S**

The present search report has been drawn up for all claims

| Place of search | Date of completion of the search | Examiner |
|---|---|---|
| Munich | 17 February 2022 | Metz, Carsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 21 19 8075**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-02-2022**

| Patent document cited in search report | | Publication date | Patent family member(s) | | Publication date |
|---|---|---|---|---|---|
| US 2019310372 | A1 | 10-10-2019 | CN | 110114632 A | 09-08-2019 |
| | | | CN | 113985427 A | 28-01-2022 |
| | | | EP | 3548841 A2 | 09-10-2019 |
| | | | JP | 2019537012 A | 19-12-2019 |
| | | | JP | 2022003345 A | 11-01-2022 |
| | | | KR | 20190093603 A | 09-08-2019 |
| | | | KR | 20210059021 A | 24-05-2021 |
| | | | US | 2019310372 A1 | 10-10-2019 |
| | | | WO | 2018160240 A2 | 07-09-2018 |
| US 5835199 | A | 10-11-1998 | NONE | | |

EPO FORM P0459

For more details about this annex : see Official Journal of the European Patent Office, No. 12/82